# EUROPEAN PATENT APPLICATION

(11) **EP 4 722 397 A1**
(43) Date of publication of application: **08.04.2026**
(21) Application number: 24205008.6
(22) Date of filing: 07.10.2024
(51) Int. Cl.: C22B 3/20, B01D 11/04, B01D 61/02, B01D 61/14, B01D 61/42, C02F 9/00, C22B 3/42, C22B 26/12, C02F 1/40, C02F 1/42, C02F 1/44, C02F 101/10

(54) **LITHIUM EXTRACTION METHOD AND SYSTEM**

(71) Applicant: Grant Prideco, Inc., Houston, TX 77042 (US)
(72) Inventor: ABDALLA, Tarig Mukhtar, 1183 DM Amstelveen (NL); FANTOFT, Rune, 1365 Blommenholm (NO)
(74) Representative: Acapo Onsagers AS

(57) **Abstract**

Method and system for extracting lithium from produced water, wherein the method comprises a) preprocessing produced water to obtain fresh water and concentrated brine, b) extracting lithium from the concentrated brine by direct lithium extraction (DLE), and c) providing a lithium rich product and a produced water rest.

## Description

The present invention relates to a method and a system for extraction of lithium from produced water.

### Background

The present invention relates to extraction of metals, specifically lithium. The demand for lithium for re-chargeable batteries for vehicles, power storage and portable electronic devices has been increasing steadily in the recent years.

Lithium is an essential building block of the low-carbon economy, particularly for electric vehicle (EV) batteries. Due to its unique properties and lack of alternatives, the global demand for lithium is predicted to continue to rise significantly. To meet this demand, lithium production needs to scale as well as exploring new resources of lithium. In addition, an efficient and environmentally methods of extractions need to be developed.

Current methods of lithium extraction and processing with rocks mining and brine evaporation, bear the following disadvantages:
- High energy consumption
- Intensive carbon footprint
- Large water consumption
- Lengthy extraction process
- High CAPEX / OPEX
- Difficult to scale up
- Environmentally unfriendly.

For the quest of efficient and environmentally friendly lithium extraction process, new technologies have recently been developed, the so-called Direct Lithium Extraction (DLE). DLE involves the selective extraction of lithium ions directly from lithium containing solutions. This method allows for faster extraction rates, reduced water consumption, and minimized environmental impact. However, the DLE technologies still require a significant amount of fresh water.

### Prior art

A known method for extracting lithium from mineral rocks is disclosed in US20060171869.

US2015132202 discloses an alumina based lithium sorbent and the use thereof.

### General description of the invention

An objective of the present invention is to provide a method and system for extraction of lithium.

A further objective is to provide a new source for obtaining lithium.

One intention is also to provide a method and system with limited or no requirement for an external source of fresh water.

It is also an intention to provide the extracted lithium as salt or dissolved salt, such as lithium chloride.

The present invention provides a method and a system as defined in the enclosed claims.

In one aspect of the present solution there is provided a method for extracting lithium from produced water, wherein the method comprises
a) preprocessing produced water to obtain fresh water and concentrated brine,
b) extracting lithium from the concentrated brine by direct lithium extraction (DLE),
c) providing a lithium rich product and a produced water rest.

The lithium rich product may be in the form of a salt or dissolved salt.

In the solution a new source is utilized, a fluid source which herein is referred to as produced water.

The term "produced water" as used herein refers to water streams produced when recovering natural substances such as hydrocarbons like natural oil and gas, and minerals. In oil and gas recovery produced water is a byproduct water stream. In one aspect of the present invention the produced water is the water stream obtained during the recovery of hydrocarbons from a natural reservoir, especially a subsea hydrocarbon well.

The term "fresh water" as used herein refers to water comprising less than 500 ppm (0.05 wt-%) of dissolved salts.

In a further aspect of the method the DLE comprises one of
i. lithium adsorption and desorption
ii. ion-exchange
iii. solvent extraction
iv. membrane separation.

These different DLE technologies are known from the field of lithium extraction from sources such as minerals and geothermal brines. The technologies are still being developed and improved. A person skilled in the art will know the details of the different DLE technologies.

In another aspect the DLE is lithium adsorption and desorption, wherein the adsorbent is an Al-based adsorbent and fresh water is used as desorbent, providing the lithium rich product dissolved in the fresh water. The Al-based adsorbent may be is Al(OH)₃ which is an selective lithium adsorbent. The saturated bed of aluminium hydroxide will be regenerated with fresh water. This will result in a rich solution of lithium chloride. The fresh water can be produced as part of the pre-processing and may also be recovered in post-processing. In one aspect the adsorption is performed at a temperature of 25 - 95°C, 30 - 90°C, 35 - 85°C, 40 - 80°C, 45- 75°C, 50-70°C, around 55 °C.

The extract lithium will normally be lithium chloride salt LiCl as chloride is normally the dominant negative ion in produced water. Accordingly, the method provides for extraction of LiCl from concentrated brine salts generated in the pre-processing step. In one aspect the lithium chloride salt is selectively extracted by adsorption to an aluminium hydroxide bed and desorbed from the bed into fresh water.

In a further aspect of the method the preprocessing includes concentrating of dissolved salts by removal of water, and wherein the salinity of the obtained concentrated brine is at least 50 g/l, at least 100 g/l, at least 250 g/l, between 100 - 1000 g/l, or between 200-500 g/l, or up to saturation. This will increase the concentration of lithium as well as other ions in the brine. The high salt concentration has a positive effect on the efficiency of the absorbed such as Al(OH)₃. The low salinity of the fresh water used for desorption provides for effective desorption.

Salinity is the amount of dissolved salts, it can be measured indirectly by measuring the conductivity. It is usually expressed as g/l (grams of salt per litre of water) or g/kg (grams of salts per kilogram of water). Temperature is an important factor in salinity calculation. As the temperature of water increases, the amount of salt that can be dissolved in it also increases, and hence the salinity increase.

Salinity as used herein is measured indirectly by means of the electric conductivity of the saline water at 25 °C. Here an electric current is passed between two electrodes of the electric conductivity meter in the saline water sample. Electric conductivity meters have built-in temperature compensation to allow for accurate salinity measurement at any temperature.

In another aspect of the method, it may include pre-treatment of the produced water before the produced water is subject to the preprocessing. The pre-treatment may comprise de-oiling, such that the oil in water (OiW) content in de-oiled produced water is in the range: 100 ppm ≤ 5 ppm, 50 ppm ≤ 15 ppm, or 20 ppm ≤ 5 ppm additionally or alternatively the pre-treatment may include removal of H₂S from the produced water. De-oiling and removal of H₂S can be performed by any applicable method. Methods for performing these operations are well known from the treatment of produced water from oil and gas recovery as part of the processes performed to allow for reuse and/or release of the produced water to the natural environment. The pre-treatment may also include other processes such as particle removal, degassing, pH adjustment etc. depending on the quality of the produced water and the DLE process selected, it may be beneficial to remove components that could have a negative effect on the DLE process and/or the quality of the lithium rich product.

When the produced water is obtained from oil and gas recovery and the pre-treatment is combined with the pre-processing the pre-treatment provides for generation of fresh water as the pre-treatment removes H₂S, hydrocarbons (dispersed and dissolved), and the preprocessing removes the mineral salts.

In a further aspect the method may further comprise concentrating the lithium rich product by recovering fresh water from the lithium rich product thereby increasing the concentration of lithium in the final lithium rich product. Further, this posttreatment may comprise removing divalent impurities from the lithium rich product, and/or polishing of the lithium rich product. The term "polishing" is used here to refer to process for removing other contaminants including ionic impurities. This may be done by different techniques including ion exchange, nanofiltration, reaction with chelating resins or other known polishing techniques. Divalent impurity removal is often done by nanofiltration, whereas polishing may be done by contacting the product with chelating resins that bind impurities.

Herein concentration of brine and lithium product is performed by removal of fresh water. The skilled person is well aware of applicable methods for removal of fresh water, such as evaporation, reverse osmosis, flash evaporation, vapor compression distillation, forward osmosis, electrodialysis, etc. Efficient adsorption may as discussed above be performed at elevated temperatures. If the concentration of the brine is performed by flashing in a flash vessel this elevated temperature can be provided by the concentration process. The adsorption of lithium by aluminium-based adsorbents is shown to be an endothermic reaction. This finding suggests that higher temperatures lead to improved internal diffusion, mass transfer of lithium ions, and enhanced adsorption processes.

The temperature range for effective adsorbent operation in brine mostly lies between 40 °C and 95 °C.

In another aspect of the method wherein the fresh water used as desorbent is fresh water recovered from concentrating the lithium rich product and/or is fresh water obtained when pre-processing produced water. The method thereby produces the desorbent as part of the pre- or post-processing which is beneficial for the overall efficiency of the method.

In a further aspect of the method the lithium concentration in the concentrated brine is at least 100 ppm, at least 200 ppm, at least 500 ppm, at least 700 ppm, between 100 and 1200 ppm, 100 - 1000 ppm, 200 - 800 ppm.

In yet another aspect of the method the adsorption is performed in two or more serial adsorption steps. Performing the adsorption in a series of steps may increase the overall efficiency and allows for the use of adsorbers specifically adjusted to selectively adsorb lithium at the concentration level present in the concentrated brine.

In a further aspect the solution comprises a lithium extraction system characterized by comprising a produced water pretreatment unit, a salt concentration/desalination unit, DLE system wherein the pretreatment unit comprises a produced water inlet and a pretreated produced water outlet in fluid communication with an inlet of the salt concentration/desalination unit, wherein the salt concentration/desalination unit comprises a concentrated brine outlet and a fresh water outlet, wherein the concentrated brine outlet is in fluid communication with an inlet of the DLE system, the DLE system comprises a lithium rich product outlet and a produced water rest outlet.

In another aspect of the lithium extraction system the DLE system comprises a lithium adsorber, wherein when in adsorption mode the inlet of the DLE system is in fluid communication with an inlet to the lithium adsorber and the lithium adsorber comprises an outlet in fluid communication with the produced water rest outlet, wherein when in desorption mode the fresh water outlet is in fluid communication with the inlet of lithium adsorber and the outlet of the lithium adsorber is in fluid communication with the lithium rich product outlet.

In another aspect of the system the lithium adsorber comprises two adsorber units arranged in series, such that the outlet of the first adsorber unit is in fluid communication with the inlet to the second adsorber unit.

The method and the system may be adapted to handle large scale production.

One option to extract lithium form large flows of brines is by bundling of standard modules of adsorbent columns, so that the brine flow rate is evenly distributed among the different columns. In this case the pre-treatment may still be one unit, and also the salt concentration could be performed in one unit. Only the concentrated brine will be distributed evenly to multiple adsorbent columns. For the desorption, each of the columns will be desorbed separately.

### Brief description of the drawings

The present method and system will be further discussed with reference to the enclosed figures that schematically illustrate the steps thereof.
Figure 1 is a schematic illustration of an embodiment of a method and system for extraction of lithium
Figure 2 is a schematic illustration of a second embodiment of a method and system for extraction of lithium.

### Detailed description of the invention

In the following the aspects of the method and system provided herein will be discussed in further detail with reference to the enclosed drawings.

The present invention is making use of direct lithium extraction (DLE) technologies. DLE comprises a selection of technologies which could be applicable for use in the present system. Known DLE techniques include adsorption, ion exchange, solvent extraction and membrane separation.

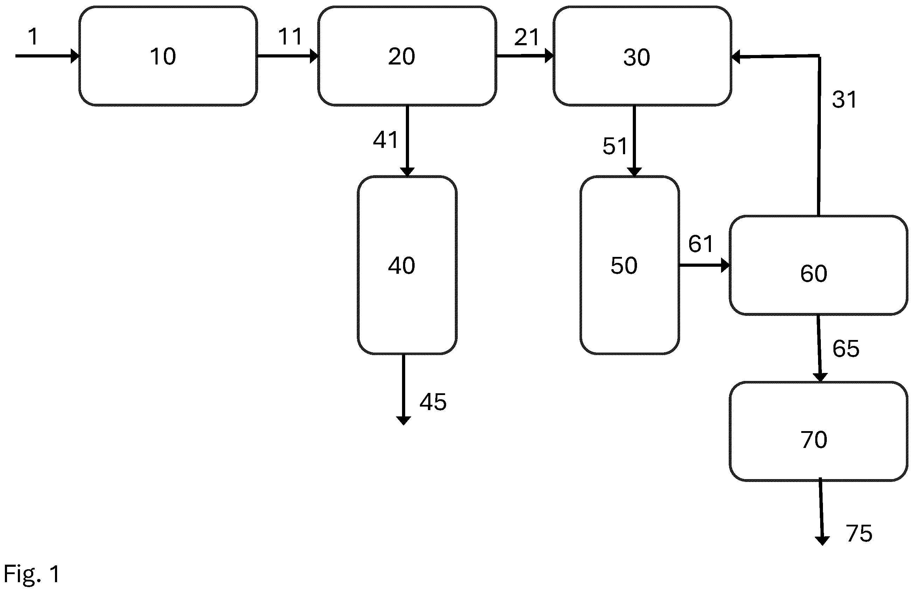

In a first aspect the method and system are a treatment and regeneration process performed with one adsorption step. The main steps of this process are illustrated on figure 1.

Here produced water 1 comprising dissolved lithium ions is pre-treated including removal of contaminants such as for instance hydrocarbons and H₂S in pre-treatment unit 10. The pretreated produced water 11 proceeds to a desalination unit 20 where the pretreated produced water is concentrated to brine 41 by removal of fresh water 21. The fresh water 21 is passed on to fresh water tank 30. The concentrated brine 41 enters the inlet of adsorber 40 in adsorption mode and lithium chloride is adsorbed by the adsorbent. The lithium depleted concentrated brine 45 exits the outlet of the adsorber 40 in adsorption mode. The lithium depleted concentrated brine 45 may be further treated to recover other valuable salts. When the adsorber 40 is saturated with lithium chloride the operation is changed for adsorption to desorption mode. On figure 1 this is illustrated as desorber 50. A person skilled in the art will understand that the if only one adsorber is present the adsorption must be interrupted to perform the desorption. However, with more than one adsorber, one adsorber may be in adsorption mode while another adsorber is a desorber in desorption mode, and their position/fluid connections can be changed to change between adsorption mode and desorption mode.

The inlet to the desorber 50 is in fluid communication with the fresh water tank 30. The fresh water 51 passes through the desorber and the LiCl is desorbed into the fresh water resulting in a lithium rich product 61 leaving the desorber outlet. This lithium rich product 61 may be further concentrated in lithium concentration unit 60, by removal of fresh water 31 from the lithium rich product 61. The fresh water 31 is returned to fresh water tank 30 and may be reused for desorption.

The concentrated lithium rich product 65 leaving the lithium concentration unit 60 may be further purified and/or polished in lithium purification unit 70, resulting in purified, concentrated LiCl 75.

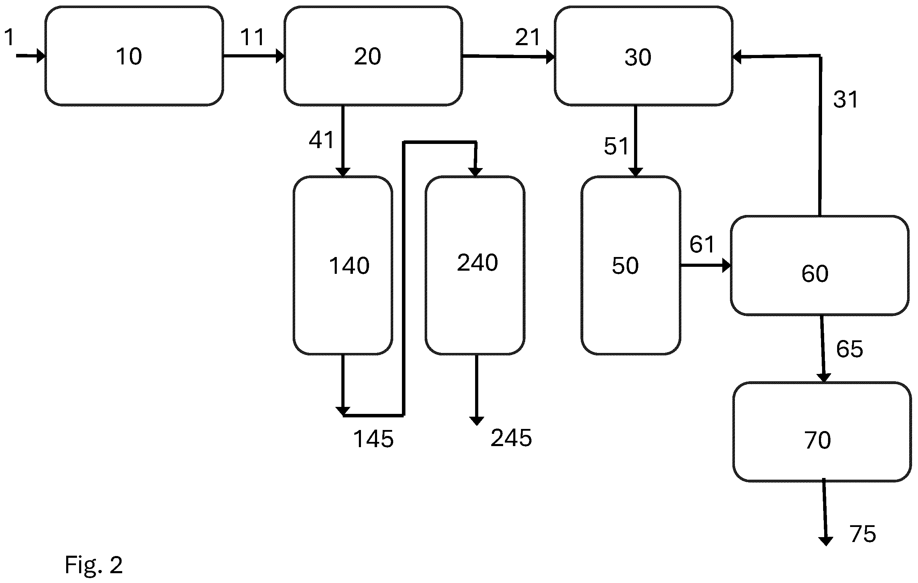

Figure 2 illustrates another aspect of the method and system wherein the adsorption is performed in two steps. The concentrated brine 41 is fed to the inlet of a first lithium adsorber 140 resulting in a partly lithium deprived concentrated brine 145 which is fed to the inlet of a second lithium adsorber 240, resulting in a lithium deprived brine 245. The first and second adsorber may not be identical and the second adsorber may be specifically adapted to selectively adsorb lithium ions from a brine with lower lithium concentration.

### Reference numbers

- 1: lithium source fluid/produced water
- 10: pretreatment unit
- 11: pretreated produced water
- 20: salt concentration/desalination unit
- 21: fresh water from desalination unit
- 30: fresh water tank
- 31: fresh water from concentrating lithium rich product
- 40,140,240: lithium adsorber
- 41: concentrated brine
- 45, 245: lithium deprived brine/produced water rest
- 50: desorber
- 51: fresh water for desorption
- 60: lithium concentration unit
- 61: lithium rich product
- 65: concentrated lithium rich product
- 70: lithium purification unit
- 75: purified concentrated lithium rich product

## Claims

1. Method for extracting lithium from produced water, **characterized in that** the method comprises
a) preprocessing produced water to obtain fresh water and concentrated brine,
b) extracting lithium from the concentrated brine by direct lithium extraction (DLE),
c) providing a lithium rich product and a produced water rest.

2. Method according to claim 1, wherein the DLE comprises one of i. lithium adsorption and desorption
ii. ion-exchange
iii. solvent extraction
iv. membrane separation.

3. Method according to claim 2, wherein the DLE is lithium adsorption and desorption, wherein the adsorbent is an Al-based adsorbent and fresh water is used as desorbent, providing the lithium rich product dissolved in the fresh water.

4. Method according to claim 3, wherein the Al-based adsorbent is Al(OH)₃.

5. Method according to any one of the proceeding claims, wherein the preprocessing includes concentrating of dissolved salts by removal of water, and wherein the salinity of the concentrated brine is at least 50 g/l, at least 100 g/l, at least 250 g/l, between 100 - 1000 g/l, or between 200-500 g/l, or up to saturation.

6. Method according to claim 5, wherein the method prior to the pre-processing comprises de-oiling, such that the oil in water (OiW) content in de-oiled produced water is in the range: 100 ppm ≤ 5 ppm, 50 ppm ≤ 15 ppm, or 20 ppm ≤ 5 ppm.

7. Method according to any one of claims 3-6, wherein the method prior to the pre-processing comprises removal of H₂S from the produced water.

8. Method according to any one of the claims 3-7, wherein the method further comprises concentrating the lithium rich product by recovering fresh water.

9. Method according to any one of the claims 3-8, wherein the fresh water used as desorbent is fresh water recovered from concentrating the lithium rich product and/or is fresh water obtained when preprocessing produced water.

10. Method according to any one of the proceeding claims, wherein the lithium concentration in the concentrated brine is at least 100 ppm, at least 200 ppm, at least 500 ppm, at least 700 ppm.

11. Method according to any one of the claims 3-10, wherein the adsorption is performed in two or more serial adsorption steps.

12. Method according to any one of the claims 3-11, wherein the method comprises removing divalent impurities from the lithium rich product.

13. Method according to any one of the claims 3-12, wherein the method comprises polishing of the lithium rich product.

14. Lithium extraction system **characterized by** comprising a produced water pretreatment unit, a salt concentration/desalination unit, DLE system wherein the pretreatment unit comprises a produced water inlet and a pretreated produced water outlet in fluid communication with an inlet of the salt concentration/desalination unit, wherein the salt concentration/desalination unit comprises a concentrated brine outlet and a fresh water outlet, wherein the concentrated brine outlet is in fluid communication with an inlet of the DLE system, the DLE system comprises a lithium rich product outlet and a produced water rest outlet.

15. Lithium extraction system according to claim 14, wherein the DLE system comprises a lithium adsorber, wherein when in adsorption mode the inlet of the DLE system is in fluid communication with an inlet to the lithium adsorber and the lithium adsorber comprises an outlet in fluid communication with the produced water rest outlet, wherein when in desorption mode the fresh water outlet is in fluid communication with the inlet of lithium adsorber and the outlet of the lithium adsorber is in fluid communication with the lithium rich product outlet.
